# EUROPÄISCHE PATENTANMELDUNG

(11) **EP 4 714 722 A1**
(43) Veröffentlichungstag der Anmeldung: **25.03.2026**
(21) Anmeldenummer: 25189048.9
(22) Anmeldetag: 11.07.2025
(51) Int. Cl.: B60L 7/18, B60L 15/32, B60L 50/53, B60L 50/75, B60L 58/40

(54) **SYSTEM AUS SCHIENENFAHRZEUGEN**

(30) Priorität: 20.09.2024 DE 102024209065
(71) Anmelder: Siemens Mobility GmbH, 80997 München (DE)
(72) Erfinder: Jaumann, Tony, 91227 Leinburg (DE); Löw, Stefan, 90443 Nürnberg (DE); Ruckes, Jonas, 91058 Erlangen (DE)
(74) Vertreter: Siemens Patent Attorneys

(57) **Zusammenfassung**

Die Erfindung betrifft ein System aus Schienenfahrzeugen umfassend ein batterie-elektrisches BE-Schienenfahrzeug (2) und ein weiteres ED-Schienenfahrzeug (3), welche seriell zu dem System (1) gekoppelt sind, wobei das System (1) dazu ausgestaltet ist, während das ED-Schienenfahrzeug (3) das System (1) antreibt, das BE-Schienenfahrzeug (2) mittels Rekuperation zu bremsen, um mittels der Bremsleistung dessen Batterieeinheit (4) aufzuladen. Des Weiteren umfasst die Erfindung ein Verfahren zum Betrieb dieses Systems.

## Beschreibung

Die Erfindung betrifft ein System aus Schienenfahrzeugen und ein Verfahren zum Betrieb eines solchen Systems.

Auf Schienennetzen sind neben klassischen Oberleitungszügen (EMU für "Electric Multiple Unit") und Dieselzügen (DEMU für "Diesel Electric Multiple Unit") zunehmend Züge mit alternativen Antrieben (z.B. Brennstoffzellenzüge, HEMU für "Hydrogen Electric Multiple Unit") und Traktionsenergiespeichern (Batterien) im Einsatz.

Fahrzeuge, die ausschließlich mit Batterien betrieben werden, also reine Batteriezüge (BEMU für "Battery Electric Multiple Unit"), haben eine begrenzte Reichweite und sind ohne Oberleitungen oder Ladestationen nur begrenzt einsetzbar. Sobald die Energie in den Batterien aufgebraucht ist, fehlt nicht nur die Traktion, sondern auch die Energieversorgung von Komfortverbrauchern, wie z.B. der Klimaanlage.

Im Fall einer gemischten Mehrfachtraktion gäbe es die theoretische Möglichkeit elektrische Energie direkt von einem Fahrzeug mit treibstoffbasiertem Energiewandler (z.B. DEMU) zum Batteriezug (BEMU) über eine Stromleitung zu übertragen, um dessen Batterie wieder aufzuladen. Jedoch ist eine übliche Kupplungseinheit nicht in der Lage, hohe elektrische Leistungen zu übertragen. Der Einbau einer geeigneten Spezialkupplung in beiden Zügen erfordert mehrere zusätzliche Komponenten und ist häufig zu teuer.

Bisher werden Batteriezüge nur über Ladestationen oder Oberleitung versorgt, was das Problem der begrenzten Reichweite nicht ausreichend löst, da diese Systeme teuer in der Installation und Wartung sind und daher auf Nebenstrecken oft nicht wirtschaftlich darstellbar sind.

Es ist eine Aufgabe der vorliegenden Erfindung, ein System aus Schienenfahrzeugen und ein Verfahren zum Betrieb eines solchen Systems anzugeben, mit denen die oben beschriebenen Nachteile vermieden werden. Bevorzugt ist es eine Aufgabe der Erfindung, auch Batteriezüge ohne Spezialkupplung über weite oberleitungsfreie Strecken in gemischter Mehrfachtraktion weiterzubetreiben und insbesondere aufzuladen. Auch ist es eine bevorzugte Aufgabe, Fahrzeuge mit treibstoffbasiertem Energiewandler, die über Energiespeicher verfügen, z.B. um Leistungsspitzen abzupuffern und den Gesamtwirkungsgrad zu erhöhen ohne Einsatz des treibstoffbasierten Energiewandlers mit Hilfe einer gemischten Mehrfachtraktion aufzuladen.

Diese Aufgabe wird durch ein System aus Schienenfahrzeugen gemäß Patentanspruch 1 und ein Verfahren gemäß Patentanspruch 7 gelöst.

Ein erfindungsgemäßes System aus Schienenfahrzeugen umfasst ein batterie-elektrisches BE-Schienenfahrzeug und ein weiteres ED-Schienenfahrzeug welche seriell zu dem System gekoppelt sind, wobei das System dazu ausgestaltet ist, während das ED-Schienenfahrzeug das System antreibt, das BE-Schienenfahrzeug mittels Rekuperation zu bremsen, um mittels der Bremsleistung dessen Batterieeinheit aufzuladen.

Um die Schienenfahrzeuge des Systems im Folgenden besser unterscheiden zu können, wird das eine Schienenfahrzeug "BE-Schienenfahrzeug" genannt, um anzudeuten, dass es einen batterieelektrischen Antrieb hat und das andere Schienenfahrzeug "ED-Schienenfahrzeug", um anzudeuten, dass es (auch) durch andere Medien angetrieben wird. Diese Medien können z.B. elektrischer Strom sein (daher das "E") oder Diesel "was mit dem "D" angedeutet werden soll. Man ist hier aber nicht zwingend auf diese beiden Alternativen festgelegt. Beispielsweise könnte das ED-Schienenfahrzeug auch durch Wasserstoff angetrieben werden und es kann auch durchaus einen Batteriespeicher haben (z.B. ein BEMU, welches aber mit einer anderen Oberleitungsspannung aufgeladen wird als das BE-Schienenfahrzeug). Das BE-Schienenfahrzeug muss nicht unbedingt ausschließlich für einen batterieelektrischen Betrieb ausgelegt sein, sondern könnte z.B. auch ein Brennstoffzellenfahrzeug mit einer Batterie sein. Es muss jedoch zwingend über eine Traktionsbatterie verfügen. Ein bevorzugtes BE-Schienenfahrzeug ist eine BEMU oder eine HEMU, ein bevorzugtes ED-Schienenfahrzeug ist eine EMU, DEMU oder HEMU.

Zusammenfassend kann gesagt werden, auf einer vorgegebenen Strecke das BE-Schienenfahrzeug dasjenige ist, welches bestimmungsgemäß ohne Energieversorgung durch einen Energieträger, sondern mit der Batterieeinheit angetrieben werden soll und das ED-Schienenfahrzeug dasjenige ist, welches bestimmungsgemäß durch einen Energieträger angetrieben werden soll. "Energieträger" sind im Rahmen der Erfindung eine Oberleitung oder ein Stoff, dem mittels eines Energiewandlers Energie entzogen wird, z.B. Diesel oder Wasserstoff. Im Rahmen dieser Erfindung wird ein Batteriesystem zur besseren Unterscheidung als Energiespeicher und nicht als Energieträger angesehen.

Das erfindungsgemäße System umfasst also ein BE-Schienenfahrzeug, welches mit einem ED-Schienenfahrzeug gekoppelt ist. Die beiden Schienenfahrzeuge können dabei direkt aneinandergekoppelt sein oder sich an unterschiedlichen Stellen eines Zuges befinden. Sie können auch unterschiedliche Zugteile darstellen, wobei das System durchaus während eines Fahrtverlaufs getrennt oder zusammengestellt werden kann. Auch können mehrere BE-Schienenfahrzeuge mir einem oder mehreren ED-Schienenfahrzeug(en) in dem System vorliegen.

Solche Zusammenstellungen mag es bereits derzeit geben. Entscheidend für das erfindungsgemäße System ist jedoch, dass es für einen bestimmten Betriebsmodus ausgelegt ist. Das System ist nämlich dazu ausgestaltet, während das ED-Schienenfahrzeug das System antreibt, das BE-Schienenfahrzeug mittels Rekuperation zu bremsen, um mittels der Bremsleistung dessen Batterieeinheit aufzuladen. Dies bedeutet, dass das ED-Schienenfahrzeug stets (auch bei einer planmäßigen Langsamfahrt) in einem Bereich mit einem optimalen Wirkungsgrad fahren kann und die resultierende Fahrgeschwindigkeit von der Bremsleistung und damit der Ladeleistung des BE-Schienenfahrzeugs abhängt. Auch eine planmäßige Bremsung, z.B. bei einer Bergabfahrt oder vor einem Halt kann durch das BE-Schienenfahrzeug durchgeführt werden und dieses währenddessen aufgeladen werden.

Das ED-Schienenfahrzeug, welches auch als "Antriebseinheit" bezeichnet werden könnte, kann eine beliebige Antriebsart aufweisen. Es kann auch ein beliebiges Kupplungssystem verwendet werden, da die Übertragung der Leistung auf das BE-Schienenfahrzeug ohnehin nur mechanisch über die Traktion erfolgt. Die Erfindung ist sehr vorteilhaft in einem Anwendungsbereich einsetzbar, bei dem keine Oberleitung vorhanden ist und die Antriebseinheit einen Diesel- oder Wasserstoffantrieb aufweist. Es sei darauf hingewiesen, dass sich das BE-Schienenfahrzeug auch über einen eigenen Stromabnehmer an einer Oberleitung aufladen könnte, was vom Wirkungsgrad häufig besser ist als eine Aufladung über Rekuperation. Jedoch kann es vorkommen, dass eine Aufladung über die Oberleitung zuweilen nicht möglich ist, da dort eine falsche Spannung oder ein falscher Spannungstyp (Wechselspannung bzw. Gleichspannung) zur Verfügung steht. In solchen Fällen, also wo keine Oberleitung vorhanden ist oder diese nicht genutzt werden kann, ist ein Einsatz der Erfindung besonders vorteilhaft.

Ein erfindungsgemäßes Verfahren dient zum Betrieb eines Systems gemäß der Erfindung. Es umfasst die folgenden Schritte:
- Antreiben des ED-Schienenfahrzeugs,
- Bremsen des BE-Schienenfahrzeugs mittels Rekuperation und Aufladen der Batterieeinheit mittels der Bremsleistung während des Antreibens durch das ED-Schienenfahrzeug. Das ED-Schienenfahrzeug wird dabei bevorzugt mit einer vorgegebenen Leistung betrieben, die besonders bevorzugt stets in einem vorgegebenen Leistungsbereich liegt. Dieser Leistungsbereich ist vorzugsweise der Leistungsbereich, in dem der höchste Wirkungsgrad des ED-Schienenfahrzeugs liegt.

In der Praxis erfolgt die Leistungsübertragung also bevorzugt von einem ED-Schienenfahrzeug mit einem treibstoffbasierten Energiewandler (z.B. DEMU oder HEMU) auf das BE-Schienenfahrzeug mit einer Traktionsbatterie (Batterieeinheit) in gemischter Mehrfachtraktion. und zwar mechanisch über die kinetische Energie der gekuppelten Schienenfahrzeuge. Die Koordinierung erfolgt über die besondere Betriebsführungsstrategie, die vom Modus Fahren/Bremsen, der gewünschten Zug-/Bremskraft und von der ggf. vorhandenen Oberleitungsspannung abhängt.

Bei einer "gemischten Mehrfachtraktion" ist in beiden Triebzügen die Leittechnik aktiv, über einen Bus verbunden, und die Softwarestände sind kompatibel. Die Leittechnik eines Triebzugs ist Master über die Leittechnik des gesamten Zugverbands. Dadurch können Traktionsleistung und Bremskräfte optimal verteilt und koordiniert werden.

Ein bevorzugter Modus des Verfahrens ist das Aufladen des BE-Schienenfahrzeugs bei einer Betriebsführung ohne Oberleitung im Fahrbetrieb (z.B. ein Verband aus BEMU+HEMU oder BEMU+DEMU). Bereits bei geringer Zugkraftanforderung für den Zugverband bringt das ED-Schienenfahrzeug seine maximal mögliche Zugkraft bzw. eine Traktionsleistung im optimalen Wirkungsgradbereich auf die Schiene. Gleichzeitig wird im BE-Schienenfahrzeug die überschüssige Zugkraft über eine elektrodynamische Bremskraft aufgebraucht. Über die resultierende Bremsleistung werden die Traktionsbatterien des BE-Schienenfahrzeugs generatorisch aufgeladen und die Komfortverbraucher mit Energie versorgt. In dem Fall, dass die Zugraftanforderung die maximal mögliche Zugkraft des ED-Schienenfahrzeugs überschreiten sollte, kann auch das BE-Schienenfahrzeug Zugkraft aufzubringen und das ED-Schienenfahrzeug damit unterstützen.

Ein weiterer bevorzugter Modus ist der Bremsbetrieb, insbesondere bei einer Betriebsführung ohne Oberleitung im Bremsbetrieb (z.B. bei einem Verband aus BEMU und HEMU / DEMU). Bei geringer bis mittlerer Bremskraftanforderung bremst nur das BE-Schienenfahrzeug durch Rekuperation und lädt dadurch seine Batterieeinheit auf. Erst bei höherer Bremskraftanforderung wird auch das ED-Schienenfahrzeug gebremst, insbesondere auch durch Rekuperation. Notfalls kann aber auch durch mechanische Bremsen gebremst werden.

Ein weiterer bevorzugter Modus ist eine Betriebsführung mit Oberleitung (z.B. bei einem Verband aus BEMU+HEMU, BEMU+DEMU oder BEMU + BEMU). In einem Netz mit Oberleitung kann das Verfahren auch umgedreht werden. Das ED-Schienenfahrzeug hat in diesem Falle Oberleitungskontakt und sorgt für die Traktion. In diesem Moment kann es sich bei dem ED-Schienenfahrzeug durchaus um das frühere BE-Schienenfahrzeug handeln. Das BE-Schienenfahrzeug (z.B. kann nun auch eine HEMU oder DEMU mit einer Batterieeinheit in Form einer Puffer-Batterie sein) schaltet seinen treibstoffbasierten Energiewandler (z.B. Brennstoffzelle oder Dieselmotor) ab, um Kraftstoff zu sparen und übernimmt dann das elektrische Bremsen so lange bis sein Puffer-Energiespeicher aufgeladen ist. In dem Netz mit Oberleitung kann durchaus auch ein batterieelektrisches Schienenfahrzeug (z.B. eine BEMU) als ED-Schienenfahrzeug eingesetzt werden, um mit Oberleitungskontakt durch obiges Verfahren ein weiteres batterieelektrisches Schienenfahrzeug (z.B. eine weitere BEMU) als BE-Schienenfahrzeug ohne Oberleitungskontakt aufladen. Dies kann zum Beispiel notwendig sein, wenn das BE-Schienenfahrzeug nicht zum Betrieb an der betreffenden Oberleitung ausgelegt ist, weil z.B. eine falsche Spannung oder ein falscher Spannungstyp (Gleichstrom/Wechselstrom) vorliegt.

Es kann also durchaus auch während einer Fahrt, wenn sich die äußeren Umstände ändern, der Fall auftreten, dass die Untereinheiten des Systems umgekehrt werden. Die Bezeichnungen "BE-Schienenfahrzeug" und "ED-Schienenfahrzeug" sind also in diesem Fall Bezeichnungen, die auf die momentane Funktion des entsprechenden Schienenfahrzeugs eingehen.

Alle oben beschriebenen Betriebsführungsstrategien sind jeweils für Push- und Pull-Betrieb umsetzbar. Dies bedeutet, dass das BE-Schienenfahrzeug sowohl geschoben als auch gezogen werden kann.

In der Praxis erkennt der Fahrzeugsteuerungs-Master (FzgSt-Master) den Kuppelvorgang und die gemischte Mehrfachtraktion. Die vorliegende Betriebsführungsstrategie kann dann entweder automatisch oder per HMI ("Human Machine Interface") aktiviert werden. Abhängig vom Betriebszustand (Oberleitung, Fahren/Bremsen, Höhe der geforderten Zug-/Bremskraft, Batterie-Ladezustand, Brennstoffzellen-Kannleistung) weist der FzgSt-Master seinen Antriebssteuergeräten (ASG) und Bremssteuergeräten (BSG) individuelle Zugkraftlimits, Bremskraftlimits, Soll-Zugkräfte, Soll-ED-Bremskräfte, Batterie-Sollladeleistungen bzw. BSZ-Sollleistungen zu. Die ASGs und BSGs des gekuppelten Triebzugs erhalten diese Informationen vom FzgSt-Master über ihren FzgSt-Slave.

Beispielsweise stellt der Triebfahrzeugführer am Fahr-Brems-Hebel (FBH) eine geringe Zugkraft ein. Den ASGs des ED-Schienenfahrzeugs wird jedoch unmittelbar die maximal mögliche Soll-Zugkraft zugewiesen, während die ASGs/BSGs des BE-Schienenfahrzeugs eine gewisse Soll-ED-Bremskraft zugewiesen bekommen, um die BEMU-Batterien zu laden. Dies ist besonders vorteilhaft, um das System zu steuern. Das System ist also bevorzugt dazu ausgestaltet, aus einer Vorgabe eines Benutzers bezüglich einer Zugkraft automatisch eine Bremskraft für das BE-Schienenfahrzeug zu berechnen und dann das ED-Schienenfahrzeug mit einer vorgegebenen Leistung zu betreiben (bevorzugt eine maximale Leistung oder eine Leistung, die in einem Bereich mit maximalem Wirkungsgrad liegt) und das BE-Schienenfahrzeug mit der berechneten Bremskraft zu bremsen.

Bei einer Bremsung stellt der Triebfahrzeugführer am FBH eine Bremskraft ein. Den ASGs bzw. BSGs des ED-Schienenfahrzeugs werden elektrodynamische Bremskraftlimits und Reibungsbremskraftlimits von Null zugewiesen, damit (zumindest zunächst) ausschließlich die elektrodynamischen Bremsen im BE-Schienenfahrzeug zum Einsatz kommen.

Ein Vorteil der Erfindung ist, dass sie auch als reine Software-Lösung implementiert werden kann. Damit ist keine kostspielige Hardware-Anpassung bei bereits entwickelten Plattformen nötig. Es können mit dem Verfahren nachträglich BEMUs in bestehende EMU- oder HEMU-Flotten integriert werden. Einem vergleichsweise günstigen BEMU kann im Zusammenspiel mit einem teureren HEMU zu mehr Reichweite auf oberleitungsfreien Strecken verholfen werden. Der HEMU dient damit also im Grunde als Range Extender. Umgekehrt können einem HEMU relativ preiswert durch den BEMU mehr Sitzplätze hinzugefügt werden. Die Brennstoffzelle im HEMU kann über längere Zeitabschnitte bei konstanter Leistung betrieben werden, da der gekuppelte BEMU die überschüssige Leistung abnimmt. Dies kann die Effizienz und Lebensdauer der Brennstoffzelle erhöhen. Bei eingeschränkter Netzleistung an BEMU-Ladestationen, könnte ein BEMU statt über die Ladestation geladen zu werden mit einem HEMU gekuppelt werden und durch oszillierendes Vor- und Zurückfahren durch die vorliegende Betriebsführung geladen werden. Unter Oberleitung kann der HEMU mit ausgeschalteter Brennstoffzelle betrieben werden und Kraftstoff sparen. Der komplette Antriebsstrang des EMU kann über längere Zeitabschnitte mit konstanter Leistung betrieben werden, da der gekuppelte BEMU die überschüssige Leistung abnimmt. Das kann die Effizienz und Lebensdauer der Umrichter und Motoren des EMU erhöhen. Ein BEMU kann durch die gemischte Mehrfachtraktion in fremden Spannungssystemen betrieben werden, und dort trotzdem dauerhaft zum Antreiben/Bremsen beitragen.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Bevorzugt ist das System dazu ausgestaltet, während eines Bremsvorgangs das BE-Schienenfahrzeug mittels Rekuperation zu bremsen, um mittels der Bremsleistung dessen Batterieeinheit aufzuladen. Wie oben bereits beschrieben wird dabei bevorzugt zunächst das BE-Schienenfahrzeug gebremst und bei Anstieg der Bremsleistung auch das ED-Schienenfahrzeug. Bei einer sehr hohen notwendigen Bremsleistung ist der zusätzliche Einsatz von mechanischen Bremsen (an mindestens einem der Schienenfahrzeuge) bevorzugt.

Für diesen Modus ist es bevorzugt, bei einer aus dem Fahrtverlauf ersichtlichen anstehenden Bergabfahrt im Vorfeld zu ermitteln, welche Lade-Energie während dieser Bergabfahrt erreicht werden kann und zusätzlich den Ladezustand der Batterieeinheit des BE-Schienenfahrzeugs zu ermitteln. Sollte die freie Kapazität der Batterieeinheit nicht ausreichen die zu erwartende Lade-Energie aufzunehmen, ist bevorzugt, dass im Vorfeld der Bergabfahrt die Batterieeinheit nicht weiter aufgeladen wird und besonders bevorzugt das BE-Schienenfahrzeug den Antrieb des ED-Schienenfahrzeugs unterstützt. Das BE-Schienenfahrzeug kann in diesem Fall den Antrieb für eine gewisse Zeit vor einem Gefälle komplett übernehmen, um seine Batterieeinheit genügend zu leeren. Dies kann Kraftstoff sparen und ist auch vorteilhaft, wenn das ED-Schienenfahrzeug in einem vorgegebenen Leistungsbereich laufen sollte, da es sonst diesen Bereich verlassen müsste.

Wenn eine Oberleitung vorhanden sein sollte und das BE-Schienenfahrzeug dazu kompatibel ist, ist es bevorzugt, dass das BE-Schienenfahrzeug über die Oberleitung aufgeladen wird.

Ein bevorzugtes System zeichnet sich dadurch aus, dass das ED-Schienenfahrzeug ein Schienenfahrzeug mit treibstoffbasiertem Energiewandler (z.B. Verbrennungsmotor+Generator, Brennstoffzelle, Gasturbine+Generator, Brennstoffzellenfahrzeug) ist oder umfasst, insbesondere ein wasserstoff-elektrisches Schienenfahrzeug (insbesondere eine Hydrogen-Electric Multiple Unit, HEMU). Das System ist bevorzugt dazu ausgestaltet, während das Brennstoffzellenfahrzeug das System antreibt, insbesondere auf Steckenabschnitten ohne Oberleitung, das BE-Schienenfahrzeug mittels Rekuperation zu bremsen, um mittels der Bremsleistung dessen Batterieeinheit aufzuladen.

Es ist bevorzugt, dass das System dazu ausgestaltet ist, zu prüfen, ob eine Zugkraftanforderung die maximal mögliche Zugkraft des Brennstoffzellenfahrzeugs überschreitet und in diesem Fall automatisch das BE-Schienenfahrzeug zur Unterstützung des Antriebs zu verwenden.

Ein bevorzugtes System ist dazu ausgestaltet, bei einem Oberleitungsbetrieb des BE-Schienenfahrzeugs, während dieses das System antreibt, das Brennstoffzellenfahrzeug mittels Rekuperation zu bremsen, um mittels der Bremsleistung dessen Traktions-Batterieeinheit aufzuladen. Hier werden also im Grunde die Rollen vertauscht. Das vorherige BE-Schienenfahrzeug agiert nun als das ED-Schienenfahrzeug und das vorherige ED-Schienenfahrzeug als das BE-Schienenfahrzeug.

Ein bevorzugtes System zeichnet sich dadurch aus, dass das ED-Schienenfahrzeug ein oberleitungsgebundenes elektrisches Schienenfahrzeug ist und das System dazu ausgestaltet ist, während das oberleitungsgebundene ED-Schienenfahrzeug das System antreibt, das BE-Schienenfahrzeug mittels Rekuperation zu bremsen, um mittels der Bremsleistung dessen Batterieeinheit aufzuladen.

Es ist bevorzugt, dass die Rekuperation im Schubbetrieb und/oder im Zugbetrieb erfolgt. Dies betrifft insbesondere ein Hin- und Herfahren.

Ein bevorzugtes System umfasst eine Fahrzeugsteuerungseinheit (FzgSt-Master, s.o.), die dazu ausgelegt ist, Rekuperationsvorgänge der Schienenfahrzeuge des Systems zu steuern, Es ist dabei bevorzugt, dass die Fahrzeugsteuerungseinheit dazu ausgelegt ist, einen Kuppelvorgang zweier Schienenfahrzeuge sowie insbesondere auch die Art der Schienenfahrzeuge zu erkennen.

Es ist bevorzugt, dass die Fahrzeugsteuerungseinheit dazu ausgelegt ist, abhängig vom Betriebszustand der Schienenfahrzeuge (Oberleitung, Fahren/Bremsen, Höhe der geforderten Zug-/Bremskraft, Batterie(BAT)-Ladezustand, Brennstoffzellen(BSZ)-Kannleistung) von ihm direkt oder über eine von ihm kontrollierte weitere Fahrzeugsteuerungseinheit (FzgSt-Slave) angesteuerten Sub-Steuergeräten, insbesondere Antriebssteuergeräten (ASG) oder Bremssteuergeräten (BSG), individuelle Zugkraftlimits und/oder Soll-Zugkräfte und/oder Bremskraftlimits und/oder Soll-Bremskräfte und/oder Batterie-Sollladeleistungen und/oder Brennstoffzellen-Sollleistungen zuzuweisen.

Bevorzugt umfasst das Verfahren den zusätzlichen Schritt:
- Überprüfen, ob ein Kuppelvorgang zur Bildung eines Systems gemäß der Erfindung stattgefunden hat, und in dem Fall, dass ein BE-Schienenfahrzeug mit einem ED-Schienenfahrzeug gekuppelt worden ist, Bremsen des BE-Schienenfahrzeugs mittels Rekuperation und Aufladen der Batterieeinheit mittels der Bremsleistung, während des Antreibens durch das ED-Schienenfahrzeug.

Die Betriebsführungsstrategie kann entweder automatisch oder per Führerstand-Display (HMI) aktiviert werden.

Es ist dabei bevorzugt, dass der Ladestand der Batterieeinheit gemessen wird und in dem Fall, dass ihr Ladezustand einen vorgegebenen Grenzwert überschreitet, wird das Bremsen des BE-Schienenfahrzeugs (und damit auch die Rekuperation von Energie) gestoppt.

Gemäß einer bevorzugten Ausführungsform des Verfahrens wird eine Zugkrafteinstellung eines Fahrzeugführers dadurch umgesetzt, dass eine vorgegebene maximale Zugkraft zum Antrieb des ED-Schienenfahrzeugs vorgegeben wird und die durch die Zugkrafteinstellung gewünschte Zugkraft durch eine entsprechende Bremsleistung des BE-Schienenfahrzeugs erreicht wird. Der Triebfahrzeugführer stellt z.B. wie im oben vorgestellten Beispiel am Fahr-Brems-Hebel (FBH) eine geringe Zugkraft ein. Den ASGs am ED-Schienenfahrzeug wird unmittelbar die maximal mögliche Soll-Zugkraft zugewiesen, während die ASGs/BSGs des BE-Schienenfahrzeugs eine gewisse Soll-ED-Bremskraft zugewiesen bekommen, um die Traktionsbatterien zu laden.

Es ist bevorzugt, dass eine Bremskrafteinstellung eines Fahrzeugführers für das ED-Schienenfahrzeug dadurch umgesetzt wird, dass das BE-Schienenfahrzeug entsprechend gebremst wird oder dass beide Schienenfahrzeuge entsprechend gebremst werden. Hier sei angemerkt, dass beim Bremsen auch eine Batterieeinheit des ED-Schienenfahrzeugs aufgeladen werden kann.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 ein erfindungsgemäßes System aus einem BE-Schienenfahrzeug und einem ED-Schienenfahrzeug,
Figur 2 das System aus Figur 1 im Bremsbetrieb,
Figur 3 das System aus Figur 1 im Oberleitungsbetrieb des BE-Schienenfahrzeugs,
Figur 4 ein erfindungsgemäßes System im Oberleitungsbetrieb des ED-Schienenfahrzeugs,
Figur 5 eine Kommunikation eines Systems nach Figur 1,
Figur 6 ein Blockdiagramm eines Verfahrens zum Betrieb eines erfindungsgemäßen Systems.

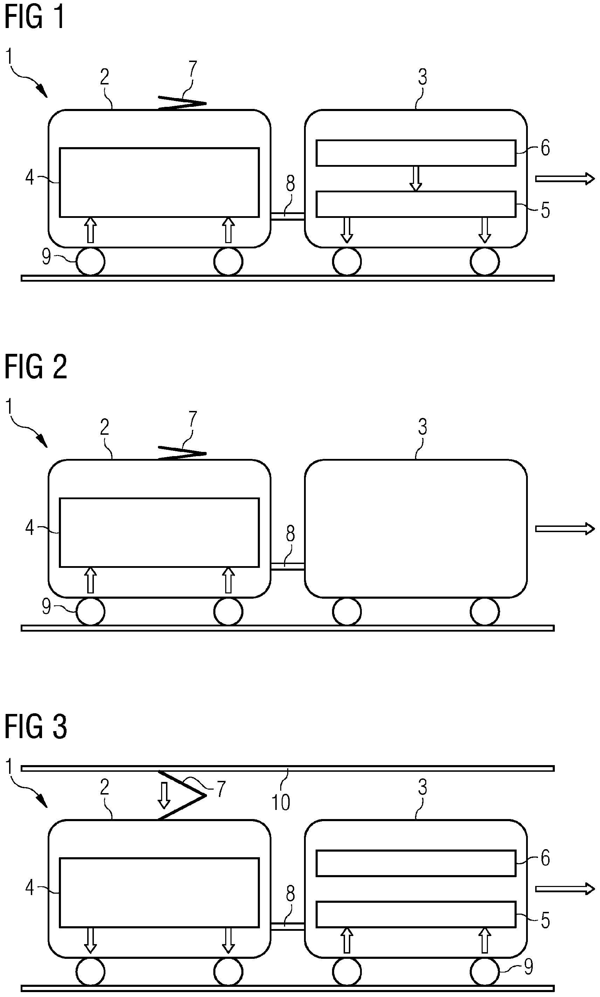

Figur 1 zeigt ein erfindungsgemäßes System 1 aus Schienenfahrzeugen umfassend ein batterie-elektrisches BE-Schienenfahrzeug 2 und ein ED-Schienenfahrzeug 3, welche seriell zu dem System 1 über eine Kupplung 8 gekoppelt sind. Das System 1 ist dabei dazu ausgestaltet, während das ED-Schienenfahrzeug 3 das System 1 antreibt, das BE-Schienenfahrzeug 2 mittels Rekuperation zu bremsen, um mittels der Bremsleistung dessen Batterieeinheit 4 aufzuladen. Dies ist mittels der weiß gefüllten Pfeile dargestellt, die den Energiefluss angeben. Der treibstoffbasierte Energiewandler 6 des ED-Schienenfahrzeugs 3 treibt über die Traktions-Batterieeinheit 5 die Räder 9 des ED-Schienenfahrzeugs 3 an. Über Rekuperation wird dann die Batterieeinheit 4 des BE-Schienenfahrzeugs 2 geladen und dadurch dessen Räder 9 gebremst.

Figur 2 zeigt das System 1 aus Figur 1 im Bremsbetrieb. Es erfolgt keine Traktion durch das ED-Schienenfahrzeug 3 und in diesem Beispiel wird die Bremskraft komplett durch Rekuperation des BE-Schienenfahrzeugs erreicht. In diesem Beispiel ging das Bremskommando von dem ED-Schienenfahrzeug aus und wurde an das BE-Schienenfahrzeug weitergeleitet.

Figur 3 zeigt das System aus Figur 1 im Oberleitungsbetrieb des BE-Schienenfahrzeugs 2. In diesem Beispiel übernimmt das BE-Schienenfahrzeug 2 die Rolle des ED-Schienenfahrzeugs 3 und umgekehrt. Es wird hier die Traktionsbatterieeinheit 5 des rechten Schienenfahrzeugs geladen, welches keinen Stromabnehmer 7 hat.

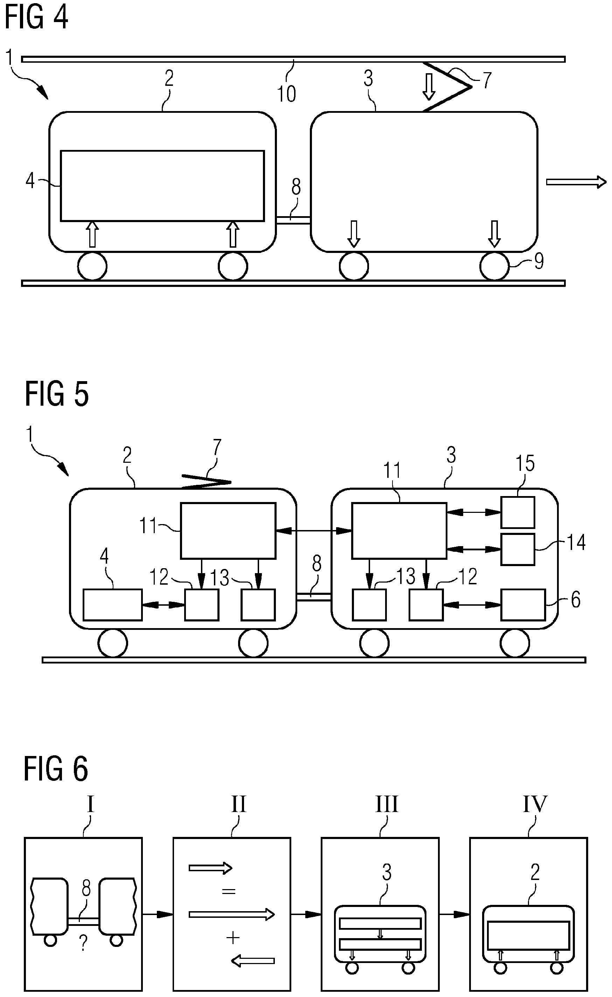

Figur 4 zeigt ein erfindungsgemäßes System 1 im Oberleitungsbetrieb des ED-Schienenfahrzeugs 3. Im Unterschied zu Figur 1 benötigt das ED-Schienenfahrzeug 3 hier keinen treibstoffbasierten Energiewandler 6 und keine Traktions-Batterieeinheit 5.

Figur 5 zeigt eine Kommunikation eines Systems 1 nach Figur 1. Das System 1 umfasst hier eine Fahrzeugsteuerungseinheit 11, die dazu ausgelegt ist, Rekuperationsvorgänge der Schienenfahrzeuge des Systems 1 zu steuern. Die Fahrzeugsteuerungseinheit 11 ist hier dazu ausgelegt ist, einen Kuppelvorgang zweier Schienenfahrzeuge über die Kupplung 8 sowie die Art der Schienenfahrzeuge zu erkennen. Eine gewünschte Betriebsführungsstrategie kann dann in diesem Beispiel per Führerstand-Display 14 aktiviert werden.

Abhängig vom Betriebszustand (Oberleitung, Fahren/Bremsen, Höhe der geforderten Zug-/Bremskraft, Batterie-Ladezustand, Brennstoffzellen-Kannleistung) weist der FzgSt-Master seinen Antriebssteuergeräten 12 und Bremssteuergeräten 13 individuelle Zugkraftlimits, Bremskraftlimits, Soll-Zugkräfte, Soll-ED-Bremskräfte, Batterie-Sollladeleistungen bzw. Brennstoffzellen-Sollleistungen zu. Die Antriebssteuergeräte 12 und Bremssteuergeräte 13 des gekuppelten Triebzugs erhalten diese Informationen vom FzgSt-Master (Fahrzeugsteuerungseinheit 11 rechts) über ihren FzgSt-Slave (Fahrzeugsteuerungseinheit 11 links).

Stellt ein Triebfahrzeugführer am Fahr-Brems-Hebel 15 eine geringe Zugkraft ein, wird dem Antriebssteuergerät 12 des ED-Schienenfahrzeug 3 unmittelbar die maximal mögliche Soll-Zugkraft zugewiesen, während das Antriebssteuergerät 12 bzw. das Bremssteuergerät 13 des BE-Schienenfahrzeugs 2 eine gewisse Soll-ED-Bremskraft zugewiesen bekommen, um die Batterieeinheiten 4 des BE-Schienenfahrzeugs 2 zu laden.

Stellt ein Triebfahrzeugführer am Fahr-Brems-Hebel 15 eine geringe Bremskraft ein wird dem Antriebssteuergerät 12 bzw. dem Bremssteuergerät 13 des ED-Schienenfahrzeugs 3 elektrodynamische Bremsraftlimits und Reibungsbremskraftlimits von Null zugewiesen, damit ausschließlich die elektrodynamischen Bremsen im BE-Schienenfahrzeug 2 zum Einsatz kommen.

Es sei angemerkt, dass Fahrzeugsteuerungseinheit 11, Antriebssteuergerät 12 und Bremssteuergerät 13 auch als verschiedene Softwaremodule ausgeführt sein können und nicht zwingend physisch getrennte Geräte sein müssen. Beispielsweise können zwei oder mehr der Komponenten Fahrzeugsteuerungseinheit 11, Antriebssteuergerät 12 und Bremssteuergerät 13 als Softwaremodule auf einer physischen Recheneinheit laufen.

Des Weiteren sei angemerkt, dass insbesondere das Antriebssteuergerät 12 und das Bremssteuergerät 13 in diesem Beispiel zwar als zwei unterschiedliche Geräte dargestellt sind, jedoch durchaus auch zu einem Steuergerät zusammengefasst werden können, welches die Aufgaben von ASB und BSG übernimmt.

Figur 6 zeigt ein Blockdiagramm eines Verfahrens zum Betrieb eines erfindungsgemäßen Systems 1.

In Schritt I wird überprüft, ob ein Kuppelvorgang zur Bildung eines Systems 1 stattgefunden hat.

In Schritt II wird eine Zugkrafteinstellung eines Fahrzeugführers (oberer Pfeil) dadurch umgesetzt, dass eine vorgegebene maximale Zugkraft zum Antrieb des ED-Schienenfahrzeugs 3 (mittlerer Pfeil) vorgegeben wird und die durch die Zugkrafteinstellung gewünschte Zugkraft durch eine entsprechende Bremsleistung des BE-Schienenfahrzeugs 2 berechnet wird (unterer Pfeil).

In Schritt III wird das ED-Schienenfahrzeug 3 gemäß dem mittleren Pfeil des Kastens II angetrieben.

In Schritt IV wird das BE-Schienenfahrzeug 2 gemäß dem unteren Pfeil des Kastens II elektrodynamisch gebremst und mittel Rekuperation die Batterieeinheit 4 des BE-Schienenfahrzeugs 2 aufgeladen.

Es wird abschließend noch einmal darauf hingewiesen, dass es sich bei der vorhergehend detailliert beschriebenen Erfindung lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Ebenso schließen Begriffe wie "Einheit" nicht aus, dass die betreffenden Komponenten aus mehreren zusammenwirkenden Teil-Komponenten bestehen, die ggf. auch räumlich verteilt sein können. Der Begriff "eine Anzahl" ist als "mindestens ein(e)" zu lesen. Unabhängig vom grammatikalischen Geschlecht eines bestimmten Begriffes sind Personen mit männlicher, weiblicher oder anderer Geschlechteridentität mit umfasst.

### Bezugszeichenliste

- 1: System
- 2: BE-Schienenfahrzeug
- 3: ED-Schienenfahrzeug
- 4: Batterieeinheit
- 5: Traktions-Batterieeinheit
- 6: Treibstoffbasierter Energiewandler
- 7: Stromabnehmer
- 8: Kupplung
- 9: Rad
- 10: Oberleitung
- 11: Fahrzeugsteuerungseinheit
- 12: Antriebssteuergerät
- 13: Bremssteuergerät
- 14: Führerstand-Display
- 15: Fahr-Brems-Hebel

## Patentansprüche

1. System (1) aus Schienenfahrzeugen, umfassend ein batterie-elektrisches BE-Schienenfahrzeug (2) und ein weiteres ED-Schienenfahrzeug (3), welche seriell zu dem System (1) gekoppelt sind, wobei das System (1) dazu ausgestaltet ist, während das ED-Schienenfahrzeug (3) das System (1) antreibt, das BE-Schienenfahrzeug (2) mittels Rekuperation zu bremsen, um mittels der Bremsleistung dessen Batterieeinheit (4) aufzuladen.

2. System (1) nach Anspruch 1, wobei das System (1) dazu ausgestaltet ist, während eines Bremsvorgangs das BE-Schienenfahrzeug (2) mittels Rekuperation zu bremsen, um mittels der Bremsleistung dessen Batterieeinheit (4) aufzuladen.

3. System (1) nach Anspruch 1 oder 2, wobei das ED-Schienenfahrzeug (3) ein Schienenfahrzeug mit einem treibstoffbasierten Energiewandler (6), insbesondere ein Brennstoffzellenfahrzeug, ist oder umfasst, insbesondere ein wasserstoff-elektrisches Schienenfahrzeug, und das System (1) dazu ausgestaltet ist, während das ED-Schienenfahrzeug das System (1) antreibt, insbesondere auf Streckenabschnitten ohne Oberleitung (10), das BE-Schienenfahrzeug (2) mittels Rekuperation zu bremsen, um mittels der Bremsleistung dessen Batterieeinheit (4) aufzuladen,
wobei das System (1) insbesondere dazu ausgestaltet ist, zu prüfen, ob eine Zugkraftanforderung die maximal mögliche Zugkraft des Brennstoffzellenfahrzeugs überschreitet und in diesem Fall das BE-Schienenfahrzeug (2) zur Unterstützung des Antriebs zu verwenden.

4. System (1) nach Anspruch 3, wobei das System (1) dazu ausgestaltet ist, bei einem Oberleitungsbetrieb (10) des BE-Schienenfahrzeugs (2), während dieses das System (1) antreibt, das Brennstoffzellenfahrzeug mittels Rekuperation zu bremsen, um mittels der Bremsleistung dessen Traktions-Batterieeinheit (5) aufzuladen.

5. System (1) nach Anspruch 1 oder 2, wobei das ED-Schienenfahrzeug (3) ein oberleitungsgebundenes elektrisches Schienenfahrzeug ist und das System (1) dazu ausgestaltet ist, während das oberleitungsgebundene ED-Schienenfahrzeug (3) das System (1) antreibt, das BE-Schienenfahrzeug (2) mittels Rekuperation zu bremsen, um mittels der Bremsleistung dessen Batterieeinheit (4) aufzuladen,
wobei die Rekuperation insbesondere im Schubbetrieb und/oder im Zugbetrieb erfolgt.

6. System (1) nach einem der vorangehenden Ansprüche, umfassend eine Fahrzeugsteuerungseinheit (11), die dazu ausgelegt ist, Rekuperationsvorgänge der Schienenfahrzeuge des Systems (1) zu steuern,
wobei die Fahrzeugsteuerungseinheit (11) insbesondere dazu ausgelegt ist, einen Kuppelvorgang zweier Schienenfahrzeuge sowie die Art der Schienenfahrzeuge zu erkennen, und
wobei die Fahrzeugsteuerungseinheit (11) insbesondere dazu ausgelegt ist, abhängig vom Betriebszustand der Schienenfahrzeuge von ihm direkt oder über eine von ihm kontrollierte weitere Fahrzeugsteuerungseinheit (11) angesteuerten Sub-Steuergeräten individuelle Zugkraftlimits und/oder Soll-Zugkräfte und/oder Bremskraftlimits und/oder Soll-Bremskräfte und/oder Batterie-Sollladeleistungen und/oder Brennstoffzellen-Sollleistungen zuzuweisen.

7. Verfahren zum Betrieb eines Systems (1) nach einem der vorangehenden Ansprüche, umfassend die Schritte:
- Antreiben des ED-Schienenfahrzeugs (3),
- Bremsen des BE-Schienenfahrzeugs (2) mittels Rekuperation und Aufladen der Batterieeinheit (4) mittels der Bremsleistung, während des Antreibens durch das ED-Schienenfahrzeug.

8. Verfahren nach Anspruch 7, umfassend den zusätzlichen Schritt:
Überprüfen, ob ein Kuppelvorgang zur Bildung eines Systems (1) nach einem der Ansprüche 1 bis 6 stattgefunden hat, und in dem Fall, dass ein BE-Schienenfahrzeug (2) mit einem ED-Schienenfahrzeug (3) gekuppelt worden ist, Bremsen des BE-Schienenfahrzeugs (2) mittels Rekuperation und Aufladen der Batterieeinheit (4) mittels der Bremsleistung, während des Antreibens durch das ED-Schienenfahrzeug (3),
wobei insbesondere der Ladestand der Batterieeinheit (4) gemessen wird und in dem Fall, dass ihr Ladezustand einen vorgegebenen Grenzwert überschreitet: stoppen des Bremsens des BE-Schienenfahrzeugs (2).

9. Verfahren nach Anspruch 7 oder 8, wobei eine Zugkrafteinstellung eines Fahrzeugführers dadurch umgesetzt wird, dass eine vorgegebene maximale Zugkraft zum Antrieb des ED-Schienenfahrzeugs (3) vorgegeben wird und die durch die Zugkrafteinstellung gewünschte Zugkraft durch eine entsprechende Bremsleistung des BE-Schienenfahrzeugs (2) erreicht wird, wobei insbesondere eine Bremskrafteinstellung eines Fahrzeugführers für das ED-Schienenfahrzeug (3) dadurch umgesetzt wird, dass das BE-Schienenfahrzeug (2) entsprechend gebremst wird oder dass beide Schienenfahrzeuge entsprechend gebremst werden.
